# EUROPEAN PATENT APPLICATION

(11) **EP 4 621 025 A1**
(43) Date of publication of application: **24.09.2025**
(21) Application number: 25158489.2
(22) Date of filing: 18.02.2025
(51) Int. Cl.: C09J 153/02, C08L 23/08, C08L 91/06, C08L 93/04

(54) **HOT MELT ADHESIVE IN GRANULES OR PEARLS FORMAT TO BOND STOPPERS TO CAPSULES AND ITS PRODUCTION PROCESS**

(30) Priority: 21.03.2024 PT 2024119340
(71) Applicant: Colquimica-Indústria Nacional de Colas, S.A., 4440-578 Valongo (PT)
(72) Inventor: FERNANDES FRUTUOSO, Cristina Isabel, 4450-150 Matosinhos (PT); ALMEIDA ROCHA, Sara Cristina, 4580-865 LORDELO-PAREDES (PT)
(74) Representative: Moniz Pereira, Manuel

(57) **Abstract**

The present invention refers to a hot melt adhesive for application in the alcoholic beverage bottling industry, more specifically, for application in capsulated stoppers, more specifically, for bonding stoppers to capsules, more specifically, for bonding synthetic stoppers to capsules. The object of the present invention is a hot melt adhesive which, despite comprising styrene block copolymers (SBC) in its formulation, more specifically styrene-ethylene-butadiene-styrene block copolymers (SEBS), this formulation can be produced in particular, but not exclusively, in the form of granules or pearls, allowing the use of automatic feeding in the application of the hot melt adhesive to the final product. Furthermore, the hot melt adhesive of the present invention has good adhesion to materials with low surface tension. In addition, it has good processability, it is suitable for the production process with application by injection and dipping and has excellent resistance to thermal shock.

## Description

### Field of the invention

The present invention refers to a hot melt adhesive and relates, in particular, to a hot melt adhesive composition, more specifically, to a hot melt adhesive composition for the alcoholic beverage bottling industry, more specifically, for application to capsulated stoppers, more specifically, for bonding stoppers to capsules, more specifically, for bonding synthetic stoppers to capsules. The object of the present invention is a hot melt adhesive composition which, despite comprising styrene block copolymers (SBC) in its formulation, more specifically styrene-ethylene-butadiene-styrene block copolymers (SEBS), this formulation can be produced in particular, but not exclusively, in the form of granules or pearls, allowing the use of automatic feeding in the application of the hot melt adhesive in the final product.

### Summary of the invention

The present invention refers to a hot melt adhesives composition. Hot melt adhesives are products that are applied to the surface of a material in a molten state, at high temperatures, and harden when cooled to form a bond between at least two materials. Hot melt adhesives are usually supplied to their users in a solid state and then heated and applied in a liquid state. In general, the application temperature for this type of product varies between 100 and 200 °C.

The hot melt adhesives are used in a wide variety of industrial applications, worldwide, and can respond to numerous complex requests from the adhesive's industry. In this context, there is the containers market, among other industries. The hot melt adhesives market has grown exponentially in the last decades due to the production, on a large scale, of synthetic polymers. Beyond its economic advantages, these types of adhesives do not include organic solvents in its composition, which enhances its sustainability and makes it an interesting product for the industry.

Currently, a hot melt adhesive considered standard for the stoppers industry is selected taking in consideration the material on which the adhesive will be applied.

Natural stoppers, or cork stoppers, have been used to seal and/or cap wine containers since the beginning of the 18th century. Natural cork stoppers have numerous advantages, including being a natural, renewable product, good durability, elasticity and compressibility. However, their main disadvantage is the likelihood of developing trichloroanisole (TCA), a fungus that is responsible for the musty aroma of wine.

Thus, as a solution, synthetic stoppers emerged in the market in the mid-1990s. These products are typically formulated from thermoplastic elastomers, with the main disadvantage being oxygen permeability, which affects the natural aging process of wine, as well as the chemical odors that can interfere with the aroma of the drink.

Furthermore, additives such as waxes have been added to overcome contamination problems and increasing their ability to control oxygen permeability.

The type of stopper to use depends on the final purpose: to close the container and/or seal the liquid.

In the case of wine, stoppers are normally used to close and seal the container, in order to prevent the drink from leaking out through the neck of the container and, at the same time, prevent the wine from undergoing premature changes due to oxidation. To enable this sealing, the stoppers are single use, meaning that once removed, they can no longer be reinserted. This type of stoppers can only be removed using a corkscrew.

In the case of alcoholic spirits, the goal is simply to prevent the drink from leaking to the outside, as these bottles are generally stored vertically, and the high alcohol content prevents oxidation. As these drinks are consumed over a long period of time, stoppers are needed to allow the container to be opened and closed, several times. In this type of container, capsulated stoppers are used, consisting of a cork/plastic body and a capsule made of another material. The stopper is inserted into the neck of the container and the capsule is left outside. The capsule is the element that allows the container to be opened manually by applying combined rotation and traction forces and also allows the stopper to be reused. This type of closure can be made from any material, including, but not limited to, glass, wood, metal, polymeric material, composite material or combinations of these.

Hot melt adhesives have proven to be the most efficient method for bonding stoppers to capsules. The industrial application of hot melt adhesives can be carried out using two different methods: injection - where the hot melt adhesive is applied to the capsule using an adhesive nozzle and then the stopper is pressed into it; or by immersion - where the stopper is dipped into the hot melt adhesive and then pressed against the capsule.

### Identification and solution to the technical problem

Stoppers are usually bonded to capsules using hot melt adhesives compositions based on ethylene vinyl acetate copolymer (EVA). The introduction of additives in natural stoppers and the replacement of natural stoppers with synthetic stoppers makes this type of adhesives more difficult to adhere to, as it reduces the surface tension of the substrates.

In addition, since these stoppers are used in spirits and, especially in the nordic countries, these containers are submitted to very low temperatures before opening, the adhesive needs to have excellent cold resistance. The EVA based products typically used in this market does not perform well at low temperatures, which could compromise their application to this type of material. Polyolefin adhesives catalysed by metallocene were therefore introduced, as these products have a lower glass transition temperature. However, these products do not adhere properly to materials with low surface tension.

Thus, the purpose of the present invention is to produce a hot melt adhesive formulation with an SBC polymer base, produced in granules or pearls, making it possible to replace EVA based hot melt adhesives that do not adhere properly to materials with low surface tension.

Normally, a hot melt adhesive formulation comprising an SBC polymer base cannot be produced in granules or pearls, due to its tackiness and rheology which does not allow extrusion in this format. Unexpectedly, with the formulation of the present invention, a hot melt adhesive with an SBC polymer base produced in granules or pearls has been achieved, and its application in the industrial application is possible using automatic feeding technology.

In addition, the hot melt adhesive of the present invention allows synthetic stoppers to be bonded to capsules and unexpectedly shows superior performance compared to the state of the art, specifically: excellent adhesion to synthetic stoppers, materials with low surface tension; excellent adhesion to natural stoppers coated with a layer of additives that make it difficult for hot melt adhesives to adhere and is suitable for capsules made of different materials.

### Background of the invention

Typically, the formulation of a hot melt adhesive comprises the following types of raw materials:
- A polymeric component comprising at least one thermoplastic polymer capable of ensure rheological properties suitable for its application. This component can be selected from among polyolefins or ethylene vinyl acetate (EVA) copolymers;
- A resin component used to increase adhesion strength to substrates, which can be selected from natural or synthetic resins. Some examples of natural resins include rosin resins, tall oil, phenolic polyterpenoid or terpene resins. The synthetic hydrocarbon resin can be selected from aliphatic (C5), aromatic (C9), aliphatic-aromatic (C5/C9) and dicyclopentadiene (DCPD) resins;
- Additive components such as waxes that allow the viscosity, softening point and open time of the adhesive to be adjusted. These can be selected from modified acrylic or carboxylic acid, polyolefin copolymer, Fischer-Tropsch and paraffin;
- In addition, other components can be added to the composition of the hot melt adhesive, including, but not limited to, pigments and other additives.

Patent documents US2008035599A1 and US20040031770A1 describe capsulated stoppers without the use of a hot melt adhesive as the component that bonds the stopper to the capsule. The capsule itself contains a flagellum that penetrates the body of the stopper and attaches itself to it.

Patent document WO2018208183A1 also refers to a capsule-stopper complex without hot melt adhesive. In this case, the capsule has anti-rotation grooves in its cavity. Once the stopper is attached to the capsule, since it has a retention system, these two components do not separate when the container is opened.

The patent documents mentioned, apart from not describing stoppers bonded to capsules using a hot melt adhesive, have the main disadvantage of requiring specific capsules and stoppers. As the stoppers and capsules may be made of different materials and of different sizes, these will not be a universal solution.

### Advantages of the invention

The scope of the present invention is a hot melt adhesive composition for application, namely, but not exclusively, in the bonding of stoppers to capsules, and features superior performance compared to the state of the art, more specifically: excellent adhesion to synthetic stoppers, materials with low surface tension; excellent adhesion to natural stoppers coated with a layer of additives that make it difficult for hot melt adhesives to adhere; suitable for capsules made of different materials; good flexibility which allows it to maintain good adhesion at low temperatures, generally between -20 °C and 10 °C, in compliance with the overall migration limit (OML) and specific migration limit (SML) in EU Commission Regulations no. 10/2011.

Additionally, the hot melt adhesive composition of the present invention comprises a polymer base comprising styrene block copolymers (SBC), more specifically styrene-ethylene-butadiene-styrene block copolymers (SEBS), which unexpectedly allows for good adhesion to low surface tension materials.

Furthermore, the hot melt adhesive composition of the present invention has good processability, which means, it is suitable for the production process with injection and immersion application and has excellent resistance to thermal shock.

Typically, a hot melt adhesive formulation comprising a polymer base containing styrene block copolymers (SBC), more specifically styrene-ethylene-butadiene-styrene block copolymers (SEBS), cannot be produced in granules or pearls, due to their stickiness and rheology, which does not allow extrusion in this format. Unexpectedly, with the formulation of the present invention, a polymer based hot melt adhesive has been achieved comprising styrene block copolymers (SBC), more specifically styrene-ethylene-butadiene-styrene block copolymers (SEBS), produced in granules or pearls, and its industrial application is possible using automatic feeding technology.

### Detailed description of the invention

The object of the present invention is a hot melt adhesive composition for use in particular, but not exclusively, with capsulated stoppers, also known as "bartops", more specifically for bonding the stopper to the capsule.

The hot melt adhesive composition of the present invention comprises a polymer base comprising SBC and is produced in granules or pearls, making it possible to replace EVA polymer based hot melt adhesives which do not adhere properly to materials with low surface tension.

A "natural stopper" means any type of cork based stoppers, including colmated natural cork, agglomerated cork, micro-agglomerated cork or combinations thereof.

"Synthetic stopper" means a stopper made from polymeric materials, specifically thermoplastic elastomers.

"Substrate" means the material or surface of the material on which the hot melt adhesive is applied and/or directly contacts. In the present invention, the most common substrates are stoppers, which may be, but are not limited to, cork or synthetic. In the present invention, the substrates may also be capsules, which may be made in particular, but not exclusively, of glass, wood, metal, polymeric material, porcelain, composite material or combinations thereof.

A "container" is an object with a closed shape, with a mouth or neck, intended to receive liquids, in particular, but not exclusively, food products.

A "capsulated stopper" or "bartop" is a system consisting of a stopper and a capsule, with the stopper inside the container and the capsule outside. A capsulated stopper is a cork or synthetic stopper on top of which is placed a capsule, which may be made of wood, polymeric material, porcelain, metal, glass or other materials.

"Sealing" means preventing the drink in the container from leaking to the outside through the neck of the container and, at the same time, preventing the wine from undergoing premature changes normally attributed to the phenomenon of oxidation.

By "capping" is meant the single purpose of preventing the drink from leaking to the outside through the neck of the container.

"Manual" means any action performed by a user without the use of any automated, electrical, mechanical, electronic or similar devices.

By "alcoholic spirits" means drinks with an alcohol content of more than 14%, such as liqueur, brandy, whisky, port wine, muscatel, etc.

"Excellent adhesion/adequate adhesion" means the ability of the hot melt adhesive to penetrate the substrate on which it is applied and allow a second substrate to adhere to the first efficiently and permanently.

"Good flexibility" means the ability of the hot melt adhesive to deform elastically, which means, any deformation it undergoes is fully recoverable and does not show cracks, splits or fractures.

"Overall migration limit (OML) " means the overall migration limit that analyses all the substances that can migrate from the material in contact with the food.

"Specific migration limit (SML) " means the specific migration limit applicable to an individual substance, based on toxicological studies where analytical techniques are used to identify the presence of these substances in food.

"Stickiness" means the force applied by the adhesive after pressure is applied to its surface.

"Automatic feeding" means the supply of hot melt adhesive to the melting tank in the form of suction and not manually by the user. This is only possible for products in granules or pearls.

"Good processability" means that hot melt adhesives are easy to use and apply on industrial lines, which means, they do not accumulate contamination and consequently stop for cleaning and maintenance.

"Suitable rheological properties" means that the material's properties change with temperature, resulting in suitable technical properties such as open time and setting time.

"Polymer base" means the polymeric materials that contribute to the fundamental characteristics of the composition and form the foundation of the composition. Thus, the other components of the formulation have the function of modifying and/or improving the properties of the polymeric base.

"Thermal shock" means a cycle with temperatures between -20 to 70 °C and a high relative humidity percentage between 70% and 95%.

"Excellent resistance to thermal shock" means the ability of a material to withstand large temperature variations without losing its performance.

"Good adhesion to low surface tension materials" means the ability to adhere to surfaces with a low surface energy, generally non-polar materials, which makes more difficult to form chemical bonds and therefore more difficult to bond.

"Good adhesion to natural stoppers" means efficient bonding between the stopper and the capsule so that when a twisting force is applied to the stopper, the stopper breaks and not the bonding plane.

"Good adhesion to synthetic materials" means that the stopper and capsule are efficiently bonded in such a way that when the stopper is twisted, the stopper does not detach until it is twisted 3 times in different directions.

By "granules or pearl format" is meant the presentation format of the hot melt adhesive, resulting from extrusion into small spheres that can be applied using automatic feeders on industrial lines.

"Open time" means the maximum time interval, after the hot melt adhesive has been applied to the first substrate, in which a second substrate can be effectively bonded.

"Setting time" is the minimum time interval in which pressure must be applied for two substrates to bond effectively. Thus, setting time is associated with the speed with which the adhesive recovers its cohesive forces.

"Appropriate viscosity" means a viscosity value at 160 °C of between 500 and 30 000 mPa·s, more preferably between 2 000 and 25 000 mPa·s.

Suitable "softening point" means a softening point value between 50 and 140 °C, more preferably between 80 and 130 °C.

"Substantially" means that the description of the shape, position or value of an element/property of the present invention is not mathematically or geometrically exact, but that the shape, position or value of an element/property of the present invention is recognised by an expert in the field as having generically or approximately the shape or position described.

"Copolymer" means a polymer obtained by the polymerisation of at least two different monomers.

According to the invention, the hot melt adhesive composition comprises:
- a polymeric component comprising at least one styrene block copolymer, more specifically styrene-butadiene-styrene block copolymers (SEBS) and optionally ethylene vinyl acetate copolymers or polyolefins;
- a resin component comprising at least one resin of natural origin;
- a wax component comprising at least an ethylene acrylic acid, a modified acrylic or carboxylic acid, polyolefin copolymer, Fischer-Tropsch and paraffin;
- an antioxidant component comprising at least one phenolic antioxidant capable of preventing degradation of the adhesive.

### Polymeric component

The polymeric base of the hot melt adhesive composition of the present invention comprises a thermoplastic polymeric component.

The polymeric component suitable for the adhesive of the present invention is selected in particular, but not exclusively, from: styrene block copolymers (SBC), more specifically styrene-ethylene-butadiene-styrene block copolymers (SEBS).

The polymeric component that corresponds to the chemical base of the product and which is selected, in particular but not exclusively, from among styrene block copolymers (SBC), more specifically styrene-ethylene-butadiene-styrene block copolymers (SEBS), corresponds to up to 70% by weight of the hot melt adhesive, preferably between 20% and 60%, more preferably between 30% and 50%, more specifically between 30% and 40%.

Preferably, the polymeric base component comprising styrene block copolymers (SBC), more preferably styrene-ethylene-butadiene-styrene block copolymers (SEBS) comprise a styrene content of between 10% and 50%, more preferably between 20% and 40%, more preferably 30%, measured according to the Kraton method and a melt flow index measured at 230 °C/2 160 g, preferably between 15 g/10 min and 40 g/10 min, more preferably between 20 g/10 min and 30 g/10 min, even more preferably 28 g/ 10 min, measured according to ASTM D1238.

Optionally, a polymer with a different chemical base may be added to the hot melt adhesive formulation to adjust its rheological properties. These polymers can be selected, including but not limited to, ethylene vinyl acetate (EVA) copolymers or polyolefins.

Preferably, the polymeric base component comprising ethylene vinyl acetate (EVA) copolymers has a vinyl acetate content between 10% and 20%, preferably 15%, measured by Fourier-transform infrared spectroscopy (FTIR), and a viscosity at 190 °C between 1 000 and 10 000 mPa ·s, preferably 5000 mPa·s, measured using a Brookfield viscometer, Thermosel system, according to ASTM D3236.

Ethylene vinyl acetate (EVA) copolymers or polyolefins account for up to 20% by weight of the hot melt adhesive, preferably between 3% and 15%, and more preferably between 5% and 10%.

### Resin component

The main purpose of the resin component is to ensure proper adhesion to the materials used, including but not limited to cork and elastomers in the case of stoppers, and polyethylene, polystyrene, or wood in the case of capsules. This component is selected from natural resins.

The natural resin considered suitable for the hot melt adhesive of the present invention is selected from, including but not limited to: glycerol ester of rosin, pentaerythritol ester of rosin, triethylene glycol ester of rosin, methyl ester of rosin, partially or fully hydrogenated rosin resin, tall oil resin, glycerol ester of tall oil resin, pentaerythritol ester of tall oil resin, methanol ester of tall oil resin, polyterpene resin, terpene-phenolic resin, gum rosin resins and hydrogenated gum rosin resin or mixtures thereof, preferably rosin resins, and more preferably hydrogenated rosin resin.

The natural resin suitable for the hot melt adhesive formulation of the present invention has a softening point between 50 and 100 °C, preferably between 70 and 100 °C, and more preferably between 75 and 90 °C, measured according to ASTM E28.

The resin component accounts for up to 65% by weight of the hot melt adhesive, preferably between 35% and 60%, more preferably between 40% and 55%, even more preferably between 42% and 52%.

### Wax component

The purpose of the wax component is to enhance the hot melt adhesive resistance to high-temperature exposure after application to the substrate. Additionally, this component increases the hardness of the adhesive while reducing the open time and setting time.

The wax component suitable for the hot melt adhesive of the present invention can be selected from modified acrylic or carboxylic acid, polyolefin copolymers, Fischer-Tropsch waxes, paraffins or mixtures thereof. Preferably, the wax component should be selected from ethylene copolymers and paraffins.

More preferably, the wax component should be selected from ethylene copolymers with a drop point between 100 °C and 120 °C, more preferably 116 °C, measured according to ASTM 3954, and paraffins with a freezing point between 50 °C and 70 °C, preferably 62 °C, measured according to ASTM D1321.

The wax content corresponds to up to 25% of the total mass of the hot melt adhesive composition, preferably between 5% and 20%, and more preferably between 10% and 15%.

### Antioxidant component

The antioxidant component in the formulation aims to prevent the degradation of the hot melt adhesive due to heat exposure during production, application, or storage of the final product. For the present invention, the use of an antioxidant component comprising of at least one primary, secondary, multifunctional antioxidant or mixtures thereof is particularly useful.

Thus, the antioxidant component is selected from phenolic antioxidants, phosphite antioxidants, thioester antioxidants, or mixtures thereof.

The content of the antioxidant component suitable for the present invention corresponds for up to 10% by weight of the hot melt adhesive, preferably up to 4%, more preferably between 0,2% and 2%, and even more preferably between 0,3% and 1,0%.

Optionally, other components/additives may be added to the hot melt adhesive composition, including but not limited to pigments, fillers, or plasticizers, to modify specific properties or enhance the performance of the hot melt adhesive used in encapsulated stoppers.

### Production method

The production method of the hot melt adhesive presented in this invention is characterized by having the following steps:
a) Mix around 60% of the resin component with 20% of the wax component at a temperature of 160 °C and, when it forms a paste, add the polymer component comprising SEBS copolymers until a viscous paste is obtained;
b) Add 80% of the wax component and the antioxidant component to step a), with constant stirring and temperature;
c) Add to step b) optionally EVA copolymers or polyolefins, with constant stirring and temperature;
d) Maintain constant stirring and temperature until the mixture obtained has a homogeneous and translucent appearance;
e) Add 40% of the resin component until a homogeneous and translucent paste is obtained;
f) When the paste obtained in step e) is homogeneous, extrude using an extruder plate with blades that allows the adhesive to be cut into granules or pearls.

### Embodiments of the invention

To evaluate the results obtained with the composition/formulation of the hot melt adhesive of the present invention and compare it with a standard hot melt adhesive used for bonding capsulated stoppers, various tests and technical trials were conducted, as presented in Table 1.

As will be clear to an expert in the art, the application of the principles described herein is not limited to the embodiments presented.

This invention is further illustrated by the following nonlimiting examples.

### Example 1

In Example 1, information is provided regarding the composition of a standard hot melt adhesive, produced in granules or pearls form, used for bonding natural stoppers to capsules. This adhesive exhibit suitable viscosity and softening point for the application. It demonstrates good adhesion to natural stoppers but, as expected, does not adhere well to synthetic materials due to their low surface tension.

### Example 2

Example 2 presents the composition of a hot melt adhesive produced in granules or pearls form, with viscosity and softening point suitable for the application. This formulation demonstrates good performance on natural stoppers, maintaining adhesion both at room temperature and after thermal shock. However, it does not achieve the desired performance at low temperatures. Regarding synthetic stoppers, this formulation does not exhibit good adhesion.

### Example 3

In Example 3, information is provided regarding the composition of a hot melt adhesive with viscosity and softening point suitable for the application. This formulation demonstrates good results on natural stoppers under all tested conditions. However, for synthetic stoppers, the adhesive detaches after two twists after thermal shock, which is insufficient for these materials. Additionally, this formulation cannot be produced in granules or pearls form due to its tackiness and rheology.

### Example 4

Example 4 corresponds to the formulation of the hot melt adhesive of the present invention. This example presents a hot melt adhesive formulation with viscosity and softening point suitable for the application. The formulation demonstrates good adhesion to both natural and synthetic stoppers under all tested conditions (room temperature, after thermal shock, and at -20 °C). Furthermore, this formulation is possible to produce in granules or pearls, enabling the automatic feeding of tanks during the application of the hot melt adhesive to the final product.

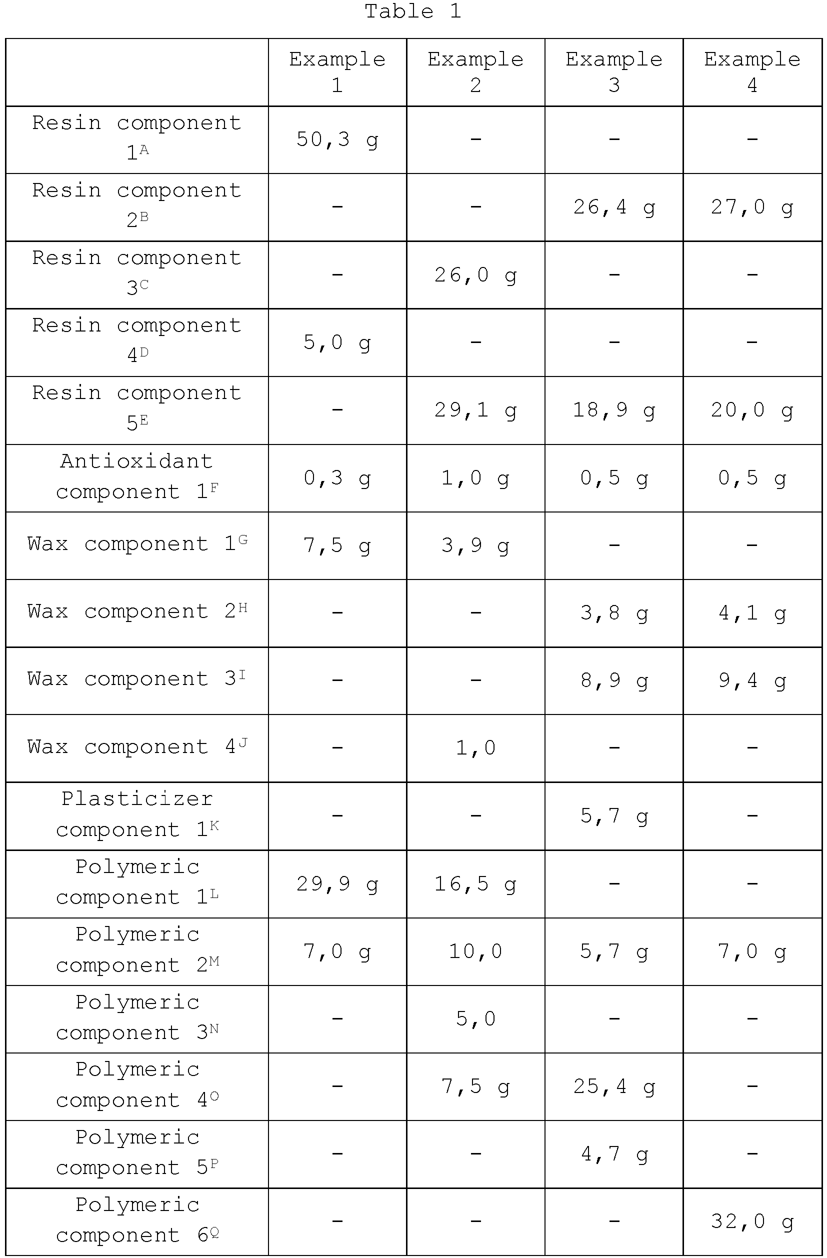

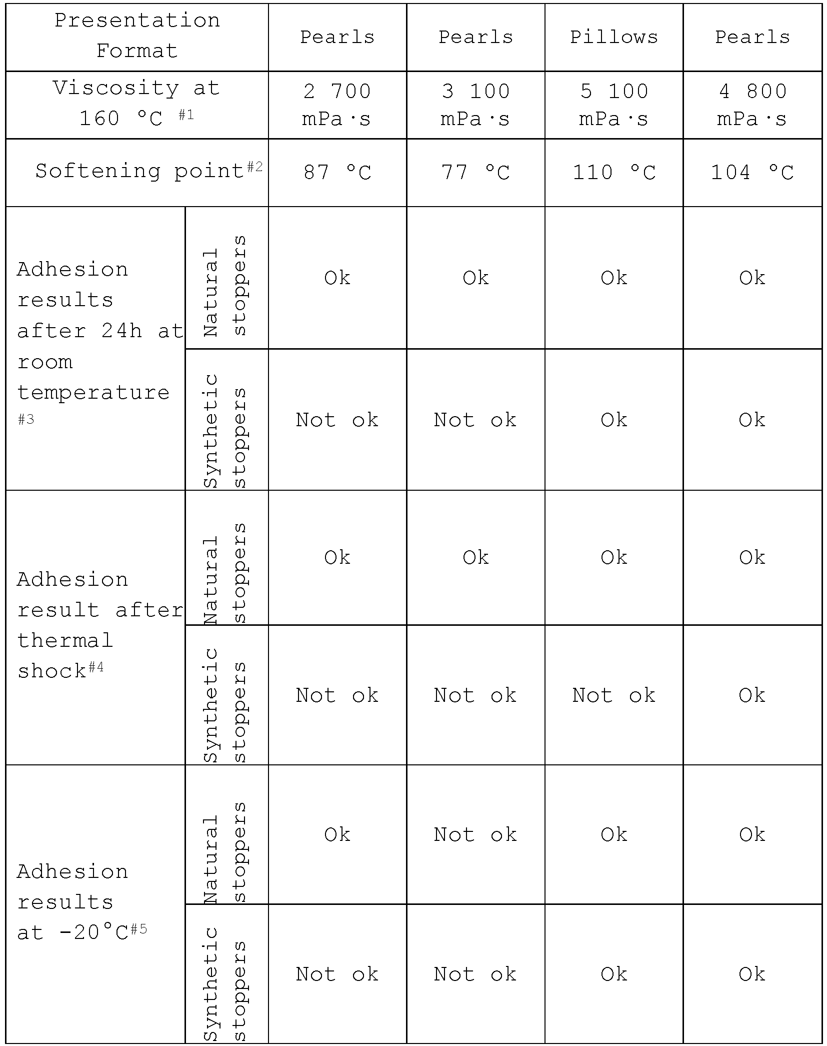

### Captions:

A - Resin component based on pentaerythritol ester of rosin resin with a softening point substantially of 98 °C, measured according to ASTM E28.
B - Resin component based on pentaerythritol ester of rosin resin with a softening point substantially of 88 °C, measured according to ASTM E28.
C - Resin component based on hydrocarbons with a softening point substantially of 125 °C, measured according to ASTM E28.
D - Resin component based on hydrocarbons with a softening point substantially of 109 °C, measured according to ASTM E28.
E - Hydrogenated rosin resin component with a softening point substantially of 80 °C, measured according to ASTM E28.
F - Primary phenolic antioxidant.
G - Wax component based on copolymers of ethylene and acrylic acid, with an acrylic acid content of 5%, measured according to ASTM D1386.
H - Paraffin wax with a freezing point of 62 °C, measured according to ASTM D938.
I - Polyethylene-based wax component with a drop point of 116 °C, measured according to ASTM 3954.
J - Additive based on stearamide that provides slip properties.
K - Paraffinic plasticizer with a flash point of 212 °C, measured according to ASTM D92.
L - Polymeric component based on ethylene-vinyl acetate copolymer with 28% vinyl acetate content, measured according to test PTM-39 and a melt flow index measured at 125 °C/0,325 kg of 400 g/10 min, measured according to ASTM D1238.
M - Polymeric component based on ethylene-vinyl acetate (EVA) copolymer with 15% vinyl acetate content, measured through Fourier-transform infrared spectroscopy (FTIR) and a viscosity at 190 °C of 5 000 mPa·s, measured according to a Brookfield viscometer, Termosel system, ASTM D3236.
N - Polymeric component based on ethylene-vinyl acetate copolymer with 18% vinyl acetate content, measured according to test JIS K6924-2 and a melt flow index measured at 125 °C/0,325 kg of 500 g/10 min, measured according to ASTM D1238.
O - Block copolymer of styrene-isoprene with 44% styrene content, according to the TSRC/Dexco method, and a melt flow index measured at 200 °C/5 kg of 40 g/10 min, measured according to ASTM D1238.
P - Block copolymer of styrene-isoprene with 18% styrene content, measured according to the TSRC/Dexco method, and a melt flow index measured at 200 °C/5 kg of 12 g/10 min, measured according to ASTM D1238.
Q - Block copolymer of styrene-ethylene-butadiene-styrene (SEBS) with 30% styrene content and a melt flow index of 28 g/10 min measured according to ASTM D1238 (230 °C/2,160 g).
#1 - Test method: Brookfield, Termosel System, ASTM D3236.
#2 - Test method: Ring and Ball, ASTM E28.
#3 - The purpose of this method is to assess the adhesion between the stopper and the capsule. The tests are conducted on natural and synthetic stoppers with polystyrene capsules. This method comprises the following steps:
1)Bond by injection the examples at a temperature of 180 °C and a grammage of 0,3 grammes of adhesive per capsule;
2) After stabilization at (23,0 ± 1,0) °C and (50 ± 5) % RH for 24 hours, evaluate the adhesion using a stopper cutting instrument called "ruler". This instrument allows the capsule to be fixed and manually applies a twisting force to the stopper.
#4 - In this method, the adhesion is evaluated after submitting the bonded substrates to thermal shock. This method involves the following steps:
1) Bond by injection the examples at a temperature of 180 °C and a grammage of 0,3 grammes of adhesive per capsule;
2) After stabilization at (23,0 ± 1,0) °C and (50 ± 5) %RH for 24 hours, submit the samples to thermal shock according to Table 2.

**Table 2**

| | Temperature (°C) | Humidity (HR%) | Duration (h) |
|---|---|---|---|
| Step 1 | 70 | 98 | 16 |
| Step 2 | -20 | - | 3 |
| Step 3 | 70 | 50 | 5 |
| Step 4 | 23 | 50 | 2 |

3) After stabilization at (23,0 ± 1,0) °C and (50 ± 5) % RH for 24 hours, evaluate the adhesion using a stopper cutting instrument called "ruler". This instrument allows the capsule to be fixed and manually applies a twisting force to the stopper.
#5 - In this method, the adhesion is evaluated at -20 °C. This method involves the following steps:
1) Bond by injection the examples at a temperature of 180 °C and a grammage of 0,3 grammes of adhesive per capsule;
2) After stabilization at (23,0 ± 1.0) °C and (50 ± 5) %RH for 24 hours, submit the samples to -20 °C for 2 hours;
3) Evaluate the adhesion using a stopper cutting instrument called "ruler". This instrument allows the capsule to be fixed and manually applies a twisting force to the stopper.

The adhesion is evaluated according to Table 3:

**Table 3**

| | Ok | Not ok |
|---|---|---|
| Natural stoppers | Capsules with ≥ 80% stopper | Capsules with < 80% stopper |
| Synthetic stoppers | > 3 torsions in different directions without stopper failure | ≤ 3 torsions in different directions without stopper failure |

Modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. Hot melt adhesive in granules or pearls format for bonding stoppers to capsules comprising between 20% to 60% by weight of a polymeric component wherein the polymeric component comprises styrene-ethylene-butadiene-styrene (SEBS) block copolymers with 30% styrene content and a melt flow index of 28 g/10 min measured according to ASTM D1238 (230 °C/ 2,160 g); between 35% to 60% of a resin component comprising natural resins with a softening point between 75 and 90 °C measured according to ASTM E28; between 10% and 15% of a wax component selected from modified acrylic or carboxylic acid, polyolefin copolymers, Fischer-Tropsch waxes, and paraffins with a freezing point between 50 °C and 70 °C measured according to ASTM D1321 or mixtures thereof; and between 0,3% and 1,0% of an antioxidant component comprising of at least one primary, secondary, multifunctional antioxidant or mixtures thereof.

2. Hot melt adhesive according to the previous claim, wherein the polymeric component optionally comprises between 3% and 15% of ethylene vinyl acetate (EVA) copolymers or polyolefins.

3. Hot melt adhesive according to the previous claim, wherein the EVA copolymers have a vinyl acetate content between 10% and 20%, measured by Fourier-transform infrared spectroscopy (FTIR), and a viscosity at 190 °C between 1 000 and 10 000 mPa·s, measured according to ASTM D3236.

4. Hot melt adhesive according to any of the preceding claims, wherein the natural resins are selected from: glycerol ester of rosin, pentaerythritol ester of rosin, triethylene glycol ester of rosin, methyl ester of rosin, partially or fully hydrogenated rosin resin, tall oil resin, glycerol ester of tall oil resin, pentaerythritol ester of tall oil resin, methanol ester of tall oil resin, polyterpene resin, terpene phenolic resin, gum rosin resins and hydrogenated gum rosin resin.

5. Hot melt adhesive according to the claim 1, wherein the polyolefin copolymers are ethylene copolymers.

6. Hot melt adhesive according to the previous claim, wherein the ethylene copolymers have a drop point between 100 °C and 120 °C, measured according to ASTM 3954.

7. Hot melt adhesive according to any of the preceding claims, wherein the antioxidant component comprising of at least one primary, secondary, multifunctional antioxidant or mixtures thereof is selected from: phenolic antioxidants, phosphite antioxidants, thioester antioxidants or mixtures thereof.

8. Hot melt adhesive according to any of the preceding claims with a viscosity of between 500 and 30 000 mPa·s at 160 °C measured according to ASTM D3236.

9. Hot melt adhesive according to any of the preceding claims **characterised by** having a softening point between 50 and 140 °C measured according to ASTM E28.

10. Process for producing the hot melt adhesive claimed in the preceding claims, comprising the following steps:
a) Mix around 60% of the resin component with 20% of the wax component at a temperature of 160 °C and, when it forms a paste, add the polymeric component comprising SEBS copolymers until a viscous paste is obtained;
b) Add 80% of the wax component and the antioxidant component to step a), with constant stirring and temperature;
c) Add to step b) optionally EVA copolymers or polyolefins, with constant stirring and temperature;
d) Maintain constant stirring and temperature until the mixture obtained has a homogeneous and translucent appearance;
e) Add 40% of the resin component until a homogeneous and translucent paste is obtained;
f) When the paste obtained in step e) is homogeneous, extrude using an extruder plate with blades that allows the adhesive to be cut into granules or pearls.

11. Use of the hot melt adhesive claimed in any claims 1 to 9 to bond stoppers to capsules.

12. Use of the hot melt adhesive according to claim 11 to bond synthetic stoppers to capsules.

13. Use of the hot melt adhesive according to claim 12 to bond synthetic stoppers to capsules by injection or immersion application methods.
